# EUROPEAN PATENT SPECIFICATION

(11) **EP 3 201 012 B1**
(45) Date of publication and mention of the grant of the patent: **12.12.2018**
(21) Application number: 15790275.0
(22) Date of filing: 01.10.2015
(51) Int. Cl.: B60C 19/00

(54) **SOUNDPROOF TYRE FOR VEHICLE WHEELS**
SCHALLSCHUTZREIFEN FÜR FAHRZEUGRÄDER
PNEU INSONORE POUR ROUES DE VÉHICULE

(30) Priority: 03.10.2014 IT MI20141741
(43) Date of publication of application: 09.08.2017
(73) Proprietor: Pirelli Tyre S.p.A., 20126 Milano (IT)
(72) Inventor: CARACINO, Paola, I-20126 Milano (IT); GIANNINI, Luca, I-20126 Milano (IT); HANEL, Thomas, I-20126 Milano (IT); SCOTTI, Andrea, I-20126 Milano (IT)
(74) Representative: Allaix, Roberto
(86) International application number: PCT/IB2015/057517
(87) International publication number: WO 2016/051371

(56) References cited:
- EP-A1- 2 397 347
- EP-A2- 1 745 947
- EP-A2- 1 795 377
- US-B1- 6 209 601

## Description

The present invention relates to a soundproof tyre for vehicle wheels. More particularly the invention relates to a soundproof tyre for vehicle wheels comprising special sound absorbent foams capable of reducing the noise perceived inside the driver/passenger compartment of vehicles, due to the attenuation of the cavity noise of the tyre itself.

### STATE OF THE ART

A tyre for vehicle wheels generally comprises a carcass structure comprising at least one carcass ply having respectively opposite end flaps engaged with respective anchoring annular structures, integrated in the zones normally identified with the name "beads".

The carcass structure is associated with a belt structure comprising one or more belt layers, situated in radial superimposition with respect to each other and with respect to the carcass structure, having textile or metallic reinforcement cords. In radially outer position with respect to the belt structure, a tread band is applied, comprising elastomeric material like other semifinished products constituting the tyre.

The respective sidewalls are also applied in axially outer position on the lateral surfaces of the carcass structure, each extended from one of the edges of the tread band up to the respective anchoring annular structure.

In the tyres of "tubeless" type, an impermeable elastomeric material layer, normally termed "liner", covers the inner surfaces of the tyre.

Following the building of the green tyre, actuated by means of assembly of the respective components, a moulding and vulcanisation treatment is executed, aimed to determine the structural stabilisation of the tyre by means of cross-linking of the elastomeric compositions, as well as, if required, to impress a desired tread pattern on the and possible graphic marks at the sidewalls.

The tyre mounted on its rim forms the pneumatic wheel, in turn intended to be associated with the hub of a vehicle.

The inner surface of the tyre and the rim define, following the assembly thereof, an inner annular cavity intended to be inflated with pressurised fluid, generally air, for the purpose of supporting the load lying on the tyre.

During the rolling of the tyre on the road, the air present in the inner annular cavity is placed under vibration, since it is cyclically compressed in the tread flattening phase, giving rise to sound waves that are amplified via resonance. The noise generated via resonance of the air in the cavity - known as cavity noise - is then propagated to the driver/passenger compartment of the vehicle, via transmission through the rim, the hub, the suspensions and the chassis, and is perceived by the passengers as being very annoying.

The frequencies at which the air in the cavity resonates are inversely proportional to the tyre circumference, and among other things also depend on the form of the cavity itself, on the nature and shape of the materials that internally cover it. As an example, the resonance frequency can vary from about 50 to 400 Hz, typically around 180 - 220 Hz for car tyres, with diameter of about 600 to 800 mm, and 130 - 150 Hz for heavy vehicle tyres, with diameter approximately 750 to 1200 mm.

In the automobile field, the comfort of the driver and passengers is increasingly requested, and in particular it is requested to reduce the noise of vehicles.

The automobile industry tends to produce vehicles that are increasingly light, and/or equipped with motors that are increasingly silent - such as electric motors - in which, by contrast, the noises originating from the road are perceived as being even more irritating.

The problem of removal of the cavity noise is therefore increasingly felt both for high range vehicles in which comfort and specifically soundproofing are important requirements, and for sports vehicles, for which a lower attitude is in fact typical together with particularly rigid transmission and damping systems that substantially do not attenuate the noise, which is transmitted practically unaltered from the tyres to the driver/passenger compartment.

In order to reduce this type of noise, it is known to introduce sound absorbent materials into the inner cavity of the tyres, in free form or by fixing strips of the same on the inner surface of the liner.

The sound absorbent material is capable of removing sound waves, converting the energy of the incident sound into heat.

Sound absorbent materials are used in the construction field, for soundproofing rooms and buildings, or in obtaining anti-noise barriers along roads and railways, for the reduction of the acoustic pollution.

In this application type, the materials are typically employed in static conditions and at room temperature or the like.

On the contrary, in the specific use as sound absorbent elements inserted in the inner cavity of tyres, the materials are subjected to quite considerable mechanical and thermal stresses.

Indeed, during the rolling, on one hand the materials are continuously stretched due to the tyre deformation, and on the other hand they are heated well over the ambient temperature, due to the heat generated by the tread in use on the road.

In particular, at high speed and in particularly severe drive conditions, the tread of the tyre can be overheated and transmit the heat to the interior, where the temperature can reach 120°C or higher (see for example that mentioned in the documents EP1876038A1, and EP1661735A1).

Both these documents mention the problem of thermal degradation of the sound absorbent foams, and EP1661735 in particular states that "it is necessary that the spongy material supports temperature of at least 140°C without melting".

It is therefore opportune that, for the specific application inside the cavity of tyres, the sound absorbent foams possess good thermal as well as mechanical properties in order to avoid being degraded and/or deformed due to the combined action of heat and stresses.

Such properties seem very important in the selection of the suitable materials.

Consequently, soundproof tyres have been developed comprising sound absorbent materials based on foams of heat-resistant polymers, preferably of the type with open cells.

The preferred polymers for this specific application are polyurethanes, both of polyester and polyether type, which have high melting points, generally greater than 150°C, and which are typically used in microcellular structures with open cells, in order to improve the acoustic performances and simultaneously allow a faster and more efficient heat dispersion with respect to foams with closed cells.

Soundproof tyres comprising sound absorbent polyurethane foams, are for example described in WO2013182477A1 or in EP2457748A1, or in the abovementioned documents.

The documents EP1661735A1, EP1876038A1 and EP2457720 mention, among the many possible alternative sound absorbent materials for tyres - such as polyether polyurethane foams, polyester polyurethane foams, chloroprene rubber foams, ethylene-propylene rubber foams, nitrile rubber foams, silicone rubber foams etc. - also polyethylenes, but then they give as examples only polyurethane foams, generally microcellular with open cells. The documents EP1795377, EP2397347 and EP1745947 describe spongy materials both with open cells and with closed cells, useful as sound absorbent materials for tyres; along the many possible materials, polyethylene is also mentioned but the cell structure is not detailed.

The document US6209601 describes foamed materials with closed cells useful as sound absorbent materials for tyres; among the many possible materials, also polyethylene is mentioned but the cell structure is not detailed.

Notwithstanding the consolidated use, the foams with open cells - which are characterised by good sound, mechanical and thermal performances and by simply processing - do not however lack defects.

Indeed, they tend to easily absorb moisture from the environment or from the compressed air used for inflation, and consequently they are subjected to bacteria and mould proliferation, with formation of odours, and even, in the case of polyester-based polyurethanes, to hydrolytic degradation. The accumulation of water in the inner cavity, due for example to a storage of the tyres outdoors without protection from weathering agents, and the partial degradation of the sound absorbent material, can also involve unbalancing in the tyre attitude, which can negatively affect the comfort of the driver and/or passengers, negatively affect the performances of the vehicle on the road and, finally, the safety.

Various solutions have been employed for confronting the problem of the hygroscopicity of the polyurethane foams.

For example, tyres have been packed in particular containers and spare parts packed in impermeable bags, in order to protect them during transport and storage; nevertheless, the problem presented itself again once the packages were opened.

The foams with closed cells, which have a much lower tendency to absorb water with respect to foams with open cells, have not however had success due to the lower acoustic properties and lesser heat dispersion capacity. Alternatively, treatments with water-repellent substances or the surface covering of the foams with impermeable films have been proposed. In addition, interventions on the proliferation of moulds have included antifungal agents inside or on the outer surfaces of the same films.

Nevertheless, the proposed solutions, in addition to generally not resolving the drawbacks, also involve operations with considerably additional costs.

### SUMMARY OF THE INVENTION

The Applicant has studied the problems of the abovementioned polyurethane foams and has found that certain macrocellular sound absorbent foams with polyolefin base, used in conventional applications (e.g. soundproofing buildings or anti-noise barriers) and apparently unsuitable for being applied in the inner cavity of tyres, since based on lower-melting polyolefins with closed cells, surprisingly resist the thermal and mechanical stresses that are generated in the rolling of the tyre, maintaining their physical integrity and capacity for acoustic removal over time, with sound performances at least comparable - if not improved - with respect to classic polyurethane foams. These polyolefin foams are unaffected by moisture, do not absorb water and are particularly light.

Therefore, the present polyolefin foams, at least given the same acoustic performances, if not improved, with respect to the conventional polyurethane foams, confer to the soundproof tyres that comprise them the same advantages in terms of duration, of improved attitude balancing and lower resistance to rolling, of simplification of the building and preservation procedures for the tyres and spare parts, substantially due to the lightness, to the hydrolytic stability and to the poor absorption of water of the foams - advantages which also translate into a cost reduction.

Unexpectedly, the Applicant has found that such particular macrocellular polyolefin foams are resistant to the use conditions inside the cavity of tyres and show sound absorbent performances that are improved or at least comparable with respect to the conventional polyurethane foams.

According to a first aspect, there is the provision of a tyre according to independent claim 1.

Preferred embodiments of the tyre are defined by the dependent claims.

In a second aspect, there is the provision of a process for producing a tyre according to independent claim 20.

### DEFINITIONS

With the term foam or foamed "macrocellular" material or "with macrocells", it is intended a foam whose cells have an average size comprised between 1.5 mm and 15 mm according to ASTM D3576.

With the term foam or foamed "microcellular" material or "with microcells" it is intended a foam having an average size of the cell less than 1.5 mm.

By "polyolefin material" it is intended a material comprising at least 50%, preferably at least 70%, more preferably at least 90%, 95%, still more preferably at least 99% by weight of one or more polyolefins.

By "polyolefins", it is intended those thermoplastic polymers deriving from the polymerisation of unsaturated hydrocarbons containing the ethylene or diene functionality.

In particular, the term polyolefin comprises homopolymers and copolymers of olefins, and mixtures thereof.

Specific examples comprise homopolymers of ethylene, of propylene, of butene, copolymers ethylene-alpha-olefin, propylene-alpha-olefin, butene-alpha-olefin, polymethylpentenes and modified polymers thereof.

By "equatorial plane" of the tyre it is intended a plane perpendicular to the rotation axis of the tyre and which divides the tyre into two symmetrically equal parts.

The terms "radial" and "axial" and the expressions "radially inner/outer" and "axially inner/outer" are used by respectively making reference to a direction perpendicular to the rotation axis of the tyre, and to a direction parallel to the rotation axis of the tyre.

The terms "circumferential" and "circumferentially" are instead used by referring to the direction of annular extension of the tyre, i.e. to the tyre rolling direction, which corresponds to a direction lying on a plane coinciding with or parallel to the equatorial plane of the tyre.

By "inner annular cavity" it is intended the inner cavity defined between a tyre and the relative mounting rim.

In the tyre, identified as crown portion is the tyre portion where the tread is arranged, axially comprised between the two edges thereof.

The tyre according to the present invention can have at least one of the following preferred characteristics, taken separately or in combination with the others.

In the tyre of the present invention, the foamed polyolefin material is characterised in that it comprises relatively large closed cells (foamed macrocellular material).

Preferably the foamed macrocellular material comprises cells having an average cell size comprised between 1.5 mm and 15 mm, between 2 mm and 10 mm, from 3 mm to 10 mm, more preferably between 4 mm and 8 mm according to ASTM D3576.

Preferably the foamed polyolefin material comprises a number of closed macrocells in 25 mm less than 30, preferably less than 20, more preferably less than 10, measured in accordance with the method BS 4443/1 Met.4. Preferably the soundproof tyre for vehicle wheels according to the invention comprises, in the inner cavity, a sound absorbent material comprising a foamed polyolefin material with closed macrocells preferably perforated, , with a number of cells less than four per linear centimetre.

Preferably the sound absorbent material of the soundproof tyre according to the present invention comprises a foamed polyolefin material, obtainable through expansion of a polyolefin material selected from among homo- and copolymers of ethylene, of propylene, of C₄-C₂₀ alpha-olefin, preferably C₄-C₁₀ alpha olefin, and mixtures thereof, more preferably between homo- and copolymers of ethylene and mixtures thereof.

Preferably the foamed polyolefin material is not cross-linked.

Examples of commercially-available polyolefins are polyethylenes, polypropylenes, polybutenes and copolymers thereof, including copolymers of ethylene with alpha-olefin, and mixtures thereof.

Preferably the polyolefin material is a polyethylene selected from among homopolymers of ethylene, copolymers of ethylene with propylene and copolymers of ethylene with a C₄-C₈ alpha-olefin.

Preferably the polyethylene is a low density polyethylene (LDPE), with a density equal to or less than 0.940 g/cm³, preferably comprised between 0.910 - 0.940 g/cm³.

Generally, polyethylene has a softening temperature less than about 120°, typically comprised between about 95 and about 115°C.

Generally polyethylene has a melt index comprised between 0.01 and 100, preferably between 0.05 and 50, more preferably between 0.1 and 20 grams per 10 minutes (ASTM D1238, 190°C/2.16)

Preferably the sound absorbent material consists of a foamed polyolefin material with closed macrocells preferably perforated,.

Preferably the sound absorbent material consists of a foamed polyethylene material with closed macrocells preferably perforated,.

Preferably the foamed polyolefin material has a density not greater than 40 Kg/m³, preferably not greater than 30 Kg/m³, more preferably not greater than 25 Kg/m³, measured according to ASTM D3575-08 Suffix W.

Preferably the foamed polyolefin material is characterized by a water absorption, according to UNI EN 12088 (RH>95%- after 28 days) less than 6 Kg/m², more preferably less than 4 Kg/m², still more preferably less than 3 Kg/m².

Preferably the foamed polyolefin material is characterized by compression resistance according to ISO 3385 1986 part 1, with compression velocity of 100 mm/min and at the fourth compression, according to Table 1:

**Table 1**

| Compression | Strength (KPa) at least of | Strength (KPa) preferably at least of |
|---|---|---|
| 25% | 1 | 2 |
| 50% | 4 | 5 |
| 70% | 20 | 22 |

The foamed polyolefin material used as sound absorbent material in the tyre of the present invention is a foamed material with closed macrocells preferably perforated,.

Foamed sound absorbent materials with closed macrocells preferably perforated, , are for example described in the patent application WO01/70859 on behalf of Dow Chemical.

Foamed materials with perforated closed cells are known for conventional applications and are described for example in the patent application WO2012/156416A1 and in the other documents cited therein.

The foamed polyolefin material with closed macrocells used as sound absorbent element in the tyre of the present invention preferably has at least one perforation, more preferably at least 5, at least 10, at least 20, at least 30 perforations per 10 cm² of surface.

The perforation of the foamed material can be partial, through or a combination of the two - i.e. a double or triple perforation, preferably it is a double perforation, i.e. a combination of through and partial perforation.

By through perforation it is intended a perforation that traverses the foamed material for the entire thickness thereof.

By partial perforation it is intended a perforation that does not traverse the foamed material for the entire thickness thereof.

The partial perforation has depth less than the thickness of the foamed material, generally a depth between about 25% and 85% of such thickness. The perforations, through or partial, that traverse through the foamed material are, in cross section, typically circular, but they can also be other shapes such as elliptical, square, triangular or oval.

The average width of the perforations is generally greater than 0.01 mm, preferably greater than 0.1 mm, preferably greater than 0.5 mm.

The average width of the perforations is preferably comprised between 0.01 mm and 2 mm, more preferably between 0.05 mm and 1.0 mm.

The through and partial perforations can have shape and/or width equal to or different from each other.

Typically, the perforations are uniformly distributed on at least one part, preferably over the entire surface of the foamed material sheet, at a distance that depends, among other things, on the thickness of such sheet.

One example of the process of double perforation of an foamed material with closed cells is described in the patent EP1026194B1.

The perforation of the foamed material causes the opening of one part of the closed macrocells

The content of open cells is generally determined according to standard tests such as ASTM D2856-A.

Preferably the foamed material after perforation still comprises at least 40% by volume, preferably at least 60%, more preferably at least 65% of closed cells.

Preferably the foamed material after perforation comprises at least 10% by volume, preferably at least 20%, at least 25%, at least 30% of cells open by the perforation.

Preferably the foamed material after perforation comprises about 10 to 50 % by volume, preferably about 15 to 40%, from 20 to 35%, of cells open by the perforation.

The opening of a certain number of cells, in the foamed material with closed cells, confers improved sound absorbent properties since it creates winding paths for the sound waves.

In addition, without being tied to any interpretive theory, the Applicant deems that the combination of the macrocellular structure with the perforation of the foamed polyolefin material also causes a quick and effective removal of the heat, surprisingly allowing the use of these polyolefin materials - *per se* characterized by inferior thermal properties - as sound absorbent materials in place of the conventional polyurethane materials, well-known to have high melting points, inside the cavity of tyres, i.e. in conditions of considerable thermal and mechanical stress.

In the tyre of the present invention the sound absorbent material is preferably employed as a single layer or, alternatively, as two or more layers coupled together, in which case they are preferably coupled via rolling.

The sound absorbent material has a thickness greater than about 5 mm, generally from about 5 to about 50 mm, preferably from 7 to 40 mm, more preferably from 10 to 30 mm.

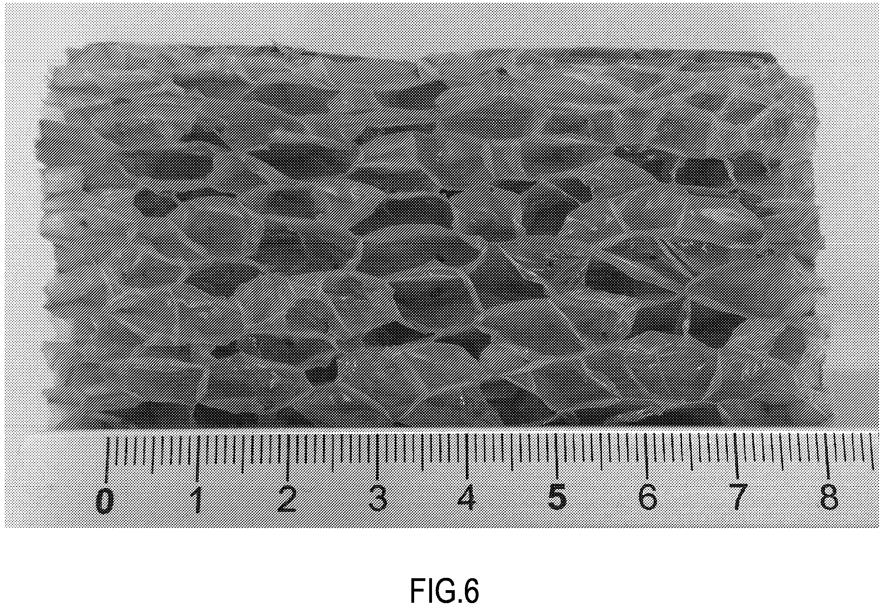

One example of a particularly preferred, commercial sound absorbent material composed of polyethylene with perforated closed macrocells is termed Stratocell Whisper™, provided by Sogimi, illustrated here in Figure 6. The photograph of Figure 6 allows appreciating the appearance of this sample of Stratocell Whisper and the actual size of its macrocells by direct comparison with the millimetre scale of the ruler.

The sound absorbent material is sold in the form of sheets, usually rectangular, or rolls.

Generally, one of the two main surfaces of the sound absorbent material is covered with a layer of suitable adhesive material, in turn protected by a first removable film, while the other surface can have, or not have, a second protective film. For the removal of the first removable film, it is possible to make the sound absorbent material adhere to the radially inner surface of the impermeable elastomeric material layer of the tyre.

Alternatively, it is possible to apply the adhesive material on the impermeable elastomeric material (liner) at the surface portion on which it is desired to position the sound absorbent material and thus proceed with the gluing of the same, or on both surfaces.

Examples of adhesive materials commonly employed for these purposes are acrylic adhesives, e.g. pressure-sensitive modified acrylic adhesives sold by Tekspan Automotive with the name 2C or by Nitto with the name 5015TP or D5952 or the acrylic adhesives via rolling 9472LE by 3M.

Nevertheless, other types of adhesives can be applied, which are commonly used in the field, as long as they are suitable for ensuring the stable adhesion of the sound absorbent material to the elastomeric material of the liner. Typically this layer is composed of halobutyl rubbers.

The foamed polyolefin material with closed macrocells, preferably perforated, applied in the tyre according to the present invention, unexpectedly shows an improved adhesion to the liner with respect to the conventional polyurethane materials with smaller closed cells.

In the case of a tyre prepared according to conventional processes, before making the sound absorbent material adhere to the radially inner surface of the liner, it is generally convenient to remove, from such surface, every contaminant possibly remaining from the forming step; removal occurs for example mechanically via rubbing and/or chemically, for example with the aid of solvents.

Advantageously, by using a tyre in which such surface is substantially non-contaminated, it is possible to proceed directly with the gluing of the sound absorbent material, minimizing or entirely eliminating the cleaning step.

In the tyre according to the present invention, the at least one layer of sound absorbent material is applied in radially inner position with respect to the impermeable elastomeric material layer.

In a preferred embodiment, only one layer of sound absorbent material is applied.

In another embodiment, two or more layers of sound absorbent materials are applied, equal to or different from each other, partially or preferably totally superimposed, of which at least one comprises a foamed polyolefin material with closed macrocells preferably perforated, as described above.

In the case of multiple layers, the sound absorbent materials are preferably adhered to each other, e.g. via gluing or via rolling.

In the tyre according to the present invention, the sound absorbent material is applied at least on one portion of the radially inner surface of the impermeable elastomeric material layer.

Preferably, the sound absorbent material is applied on the radially inner surface of the impermeable elastomeric material which is extended over the entire circumference of the tyre and axially at least at a crown portion of the tyre, preferably comprised between 10% and 70% of the crown of the tyre.

Preferably, the sound absorbent material is applied on the radially inner surface of the impermeable elastomeric material which is extended over the entire circumference of the tyre and axially from bead to bead.

Preferably, the sound absorbent material is applied on the radially inner surface of the impermeable elastomeric material which is extended for a part of the circumference of the tyre.

Preferably, the sound absorbent material is applied on the radially inner surface of the impermeable elastomeric material which is axially extended in a substantially centred position with respect to the equatorial plane of the tyre.

In the tyre according to the present invention, the sound absorbent material can be applied on the radially inner surface of the impermeable elastomeric material as the only strip or in multiple strips, preferably circumferentially parallel to each other or with tilted progression with respect to the equatorial plane.

Preferably, the sound absorbent material is applied on the radially inner surface of the impermeable elastomeric material in a manner such to distribute the load as symmetrically as possible, so as to avoid unbalancing the tyre attitude.

Preferably, the sound absorbent material is applied on the radially inner surface of the impermeable elastomeric material, preventing the superimposition of the end flaps of the one or more material strips. Preferably the covering of the inner surface is equal to or less than 100%, preferably greater than 50%.

Preferably the covering is obtained with a variable number of pieces, preferably greater than or equal to 1, preferably less than 10.

Preferably, the tyre of the invention is high performance (HP High Performance) or ultra high performance, intended to equip vehicles for transporting mainly people, such as the sedan, van, station wagon, SUV (Sport Utility Vehicle) and/or CUV (Crossover Utility Vehicle); typically, the tyres allow high travel speeds.

The tyres with high and ultra high performance are in particular those which allow reaching speeds greater than at least 160 km/h, greater than 200 km/h and up to over 300 km/h. Examples of such tyres are those belonging to the classes "T", "U", "H", "V", "Z","W', "Y", according to the standard E.T.R.T.O. - (European Tyre and Rim Technical Organization), in particular for four-wheel vehicles with large engine displacement. Typically, the tyres belonging to such classes have width with section equal to or greater than 185 mm, preferably not greater than 325 mm, more preferably comprised between 195 mm and 325 mm. Such tyres are preferably mounted on rims having fitting diameters equal to or greater than 15 inches, preferably not greater than 24 inches, more preferably comprised between 17 inches and 22 inches. By SUV and CUV it is intended vehicles with raised attitude, typically with integral traction having engine displacement equal to or greater than 1800 cc, more preferably comprised between 2000 cc and 6200 cc. Preferably, such vehicles have mass greater than 1400 Kg, more preferably comprised between 1500 Kg and 3000 Kg.

The tyre of the invention can be used as a summer tyre, winter tyre, or tyre of "all season" type (tyres usable in all seasons).

### BRIEF DESCRIPTION OF THE DRAWINGS

Further characteristics and advantages will be more evident from the detailed description of a preferred but not exclusive embodiment of a soundproof tyre, according to the present invention.

Such description is set forth hereinbelow with reference to the enclosed drawings, provided as a non-limiting example, in which:
- Figure 1 schematically show, in radial half-section, a soundproof tyre for vehicle wheels according to the present invention;
- Figure 2 illustrates the damping performances for the cavity noise in the percussion test of a tyre according to the invention (samples 1-3), and of a comparison tyre C1, lacking sound absorbent material.
- Figures 3 and 4 show the damping performances for the cavity noise in the noise measurement test in semi-anechoic chamber of a tyre according to the invention (sample 3), and of comparison tyres (C1), lacking sound absorbent material, and (C2), comprising a classic polyurethane foam with open microcells, at the speeds of 65 and 80 Km/h.
- Figures 5a and 5b present the graphs relative to the inner noise measured in road tests at speeds comprised between 40 and 80 Km/h, at two points in the driver/passenger compartment of a car with tyres according to the invention, comprising foamed polyethylene material with perforated closed macrocells (sample 3), or comparative tyres comprising polyurethane foams with open microcells (C2, C3) or comprising foamed polyethylene material with smaller, non-perforated closed cells (C4 and C5).
Figure 6 is the photograph of a sample of foamed polyolefin material with perforated closed macrocells preferably used in the soundproof tyre according to the present invention, next to a reference ruler with millimetre scale.
Figure 7 reports the damping performances for the cavity noise in the noise measurement test in semi-anechoic chamber of a tyre according to the invention (sample 3), before and after the fatigue test.

### DETAILED DESCRIPTION OF THE INVENTION

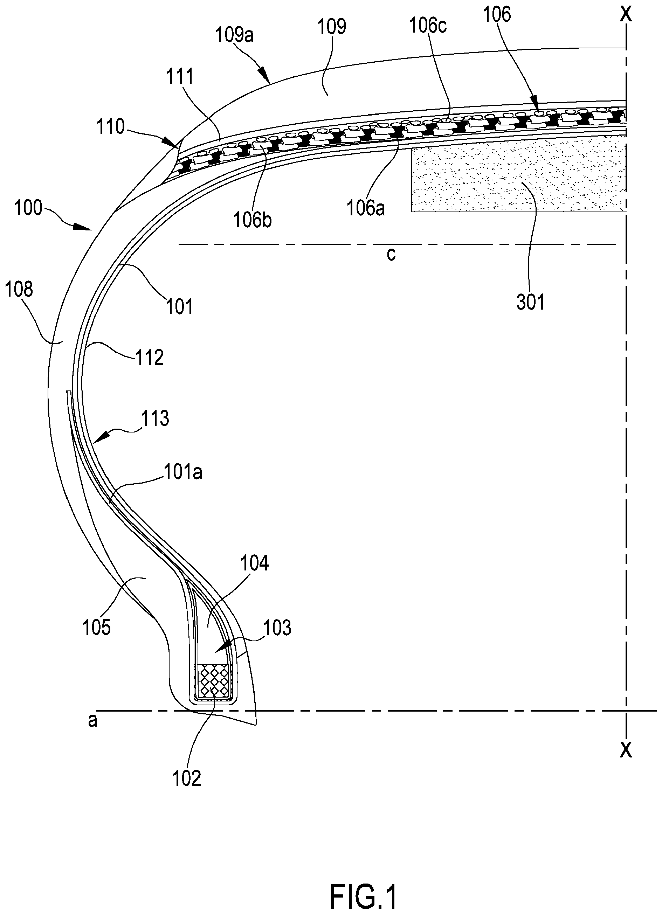

Figure 1 schematically shows, in radial half-section, a soundproof tyre for vehicle wheels comprising foamed polyolefin material with closed macrocells according to the present invention.

In particular, in figure 1, "a" indicates an axial direction and "X" indicates a radial direction, in particular with X-X the line of the equatorial plane is indicated.

The tyre 100 for four-wheel vehicles comprises at least one carcass structure, comprising at least one carcass layer 101 having respectively opposite end flaps engaged with respective anchoring annular structures 102, termed bead cores, possibly associated with a bead filler 104. The zone of the tyre comprising the bead core 102 and the filler 104 forms a bead structure 103 intended for anchoring the tyre on a corresponding mounting rim, not shown.

The carcass structure is usually of radial type, i.e. the reinforcement elements of the at least one carcass layer 101 are situated on planes comprising the rotation axis of the tyre and substantially perpendicular to the equatorial plane of the tyre. Said reinforcement elements are generally constituted by textile cords, for example rayon, nylon, polyester (e.g. polyethylene naphthalate (PEN)). Each bead structure is associated with the carcass structure by means of backward folding of the opposite lateral edges of the at least one carcass layer 101 around the anchoring annular structure 102 in a manner so as to form the so-called turn-ups of the carcass 101a as illustrated in figure 1.

In one embodiment, the coupling between the carcass structure and the bead structure can be provided by means of a second carcass layer (not shown in figure 1) applied in an axially outer position with respect to the first carcass layer.

An anti-abrasive strip 105 made with elastomeric material is arranged in an outer position of each bead structure 103.

The carcass structure is associated with a belt structure 106 comprising one or more belt layers 106a, 106b situated in radial superimposition with respect to each other and with respect to the carcass layer, having typically textile and/or metallic reinforcement cords incorporated in a layer of elastomeric composition.

Such reinforcement cords can have cross orientation with respect to a circumferential extension direction of the tyre 100. By "circumferential" direction, it is intended a direction generically directed according to the rotation direction of the tyre.

In radially more external position with respect to the belt layers 106a,106b, at least one circumferential reinforcement layer 106c is applied, commonly known as "0° belt", comprising at least one belt layer circumferential.

The reinforcement layer (circumferential belt) can comprise a plurality of typically metallic and/or textile cords.

In radially outer position with respect to the belt structure 106, a tread band 109 is applied that is made of elastomeric material, like other semifinished products constituting the tyre 100.

Respective sidewalls 108 made of elastomeric material are also applied in axially outer position on the lateral surfaces of the carcass structure, each extended from one of the lateral edges 110 of the tread 109 up to the respective bead structure 103. The tyre portion comprised between the edges 110 identifies the crown C of the tyre. At such crown C, hence up to the edges 110 in radially inner position with respect to the tread, the belt structure 106 is preferably extended.

In radially outer position, the tread band 109 has a rolling surface 109a intended to come into contact with the ground. Circumferential grooves, which are connected by transverse notches (not represented in figure 1) so as to define a plurality of blocks of various shape and size distributed on the rolling surface 109a, are generally obtained in this surface 109a, which is represented smooth in figure 1 for the sake of simplicity.

An underlayer 111 can be arranged between the belt structure 106 and the tread band 109.

An impermeable elastomeric material layer 112, generally known as "liner", provides the necessary impermeability to the tyre inflation air, and is typically arranged in a radially inner position with respect to the carcass layer 101. The radially inner surface 113 of the impermeable elastomeric material layer 112 is adhered, for example by means of gluing, to a layer of sound absorbent material 301 comprising a foamed polyolefin material with closed macrocells preferably perforated..

The layer of sound absorbent material can be made to adhere to the radially inner surface 113 of the impermeable elastomeric material layer by means of gluing with suitable adhesives, such as an acrylic adhesive, or via fitting, or compression by making the sound absorbent layer of greater size than the inner diameter of the tyre.

With reference to figure 1, a tyre 100 is shown in radial section which bears a sound absorbent layer 301, made of foamed polyolefin material with closed macrocells preferably perforated. The sound absorbent layer 301 is made integral with the radially inner surface 113 of the impermeable elastomeric material layer 112 in the crown portion C by means of gluing, occupying in axial extension at least one part of said crown portion.

A process for producing a soundproof tyre for vehicle wheels comprises:
i) providing a vulcanised and moulded tyre
ii) optionally, cleaning at least one portion of the radially inner surface of the tyre, and
iii) applying a sound absorbent material at least on the portion, optionally cleaned, of the radially inner surface of the tyre,
wherein the sound absorbent material comprises a foamed polyolefin material with closed macrocells, characterised by
an average cell size of at least 1.5 mm, more preferably of at least 3 mm, still more preferably of at least 4 mm according to ASTM D3576, preferably perforated.

With regard to the sound absorbent material, the present process preferably provides for using the materials in the preferred application modes already indicated in relation to the soundproof tyre according to the invention.

The cleaning operation ii) of the present process is generally carried out if the tyre provided in step i) is contaminated on the radially inner surface of the impermeable elastomeric material layer by lubricants or oils or emulsions and anti-adhesive solutions applied there during the forming of the tyre, as occurs in the case of tyres prepared according to conventional processes.

The presence of these contaminants generally does not allow applying the sound absorbent material on the inner surface of the liner with an adhesion suitable for resisting subsequent stress during use, even employing highly adhesive, costly and hard-to-handle glues.

In such case, in order to remedy these problems, it is preferred to proceed with the cleaning operation, at least on the part of the radially inner surface of the liner affected by the application of the sound absorbent material.

The cleaning can be conducted according to any suitable method, both via mechanical removal with sponges, rags or brushes, and via dissolution of the contaminants with suitable solvents, or combinations thereof. Advantageously, by instead providing a tyre in which such surface is substantially not contaminated, it is possible to proceed directly with the gluing of the sound absorbent material, minimizing or entirely avoiding the cleaning operation.

The operation of applying a sound absorbent material on at least one portion of the radially inner surface of the impermeable elastomeric material layer, optionally cleaned, is preferably conducted via gluing.

The gluing of the sound absorbent material is conducted by using adhesives or glues suitable for such purpose, preferably acrylic adhesives.

In order to apply the sound absorbent material via gluing, the adhesive can be applied at least on one portion of one of the two main surfaces of the sound absorbent material, on at least one portion of the radially inner surface of the impermeable elastomeric material layer, or on both, in corresponding or non-corresponding portions.

Preferably, since they are commercially available, sound absorbent materials in sheet or roll form are used, already arranged with an additional layer of adhesive material deposited on one of the main surfaces, adhesive layer suitably protected by a first removable film.

For the application, after having possibly cut the sound absorbent material to size, the first protective film is removed from the adhesive layer and it is applied on the desired surface portion of the liner under pressure, manually or with suitable automated systems.

The sound absorbent material is typically sold with a further (second) removable protective film arranged on the other main surface, that not covered by the adhesive. This second film, which mainly accomplishes protection functions for the foamed sound absorbent material, is generally constituted by a thermoplastic film.

In the soundproof tyre according to the present invention, this second film can be left adhered, or is preferably removed, after the application of the sound absorbent material.

The Applicant has observed that the acoustic performances of the tyre according to the invention are generally improved if this second film of the sound absorbent material is removed.

The Applicant has found that these particular sound absorbent materials, used for soundproofing building and equipment or creating anti-noise road barriers, hence for static applications and/or in controlled temperature conditions, are surprising suitable and effective in damping the resonance noise, even when positioned inside the cavity of a tyre - i.e. in conditions of considerable mechanical and thermal stress - even if they are composed of polyolefins, well-known to have lower melting points with respect to the polyurethanes typically used for this application.

Advantageously, these materials have hydrolytic stability and do not absorb water. In addition, due to the morphological characteristic of the macrocells, they are particularly light, contributing to the overall reduction of the weight of the finished tyre.

The following examples are now provided for illustrative and non-limiting purposes.

### EXAMPLES

### PHONOMETRIC TESTS

In order to evaluate the performances in the attenuation of the cavity noise of sound absorbent materials of the present invention and of the comparative materials, sample tyres were prepared by applying strips of the pre-selected materials on the inner surface of the liner according to the modes described in detail below.

The acoustic performances were then measured by means of phonometric tests conducted both on the tyre mounted on the rim (percussion test or Hammer test) and on the tyre mounted on a car, with evaluations in a closed setting (test in a semi-anechoic chamber) and on the road (measurements of the noise of the driver/passenger compartment and opinion of the tester).

### Preparation of the samples

The inner surface of the liner made of bromobutyl material of a tyre Pirelli 275/45R20 at the crown portion has been cleaned with a soft abrasive sponge in order to remove all contamination of the anti-adhesive solution applied during the vulcanisation step.

Subsequently, the selected sound absorbent material has been applied as a single strip on such surface, by means of an acrylic adhesive layer interposed between the foam and the liner. The other surface of the foam, non-adhesive, was covered by a removable protective film.

The sound absorbent material has been applied by covering inner surface of the liner for the entire circumference, symmetrically with respect to the equatorial plane.

The performances of the tyre comprising the polyethylene foam with perforated, closed macrocells A according to the invention (samples 1-3) were compared with those of a base tyre lacking sound absorbent foams (sample C1) and with those of comparative tyres comprising the polyurethane foam with open microcells B in two different thicknesses (20 e 10 mmm) (samples C2-C3) and polyethylene foams with non-perforated closed microcells D1 and D2 (samples C4, C5)

Foam A was a polyethylene foam with closed macrocells, with double perforation; density 25 Kg/m³ measured according to ASTM D3575-08 Suffix W; Cells/25 mm < 10 according to BS 4443/1 Met.4; thickness 10 or 20 mm, sold by Sogimi with the commercial name Stratocell Whisper® (Figure 6). This foam had a first surface, covered with adhesive and with a first protective film, and a second surface, directly covered by a second protective film. In samples 1 and 2, the second protective film was maintained; this was instead removed in sample 3.

Foam B was a polyurethane foam with open microcells PL38LWF (Tekspan Automotive), density 35-41 Kg/m³ (ISO 1855), number of cells/25 mm >40, thickness 10 or 20 mm.

Foam D1 was a cross-linked polyolefin foam with closed microcells, number of cells/25 mm >40); density 33 ± 3.5 Kg/m³ measured according to ISO 845-88; sold by Tekspan Automotive with the commercial name K630.

Foam D2 was a cross-linked polyethylene foam with closed microcells (number of cells/25 mm >40); density 30 ± 5 Kg/m³ measured according to ISO 845-88; sold by Tekspan Automotive with the commercial name of X105 SM.

In the following Table 2, the samples of the tyres thus prepared are reported along with their structural characteristics:

**Table 2**

| Sample No. | 1 | 2 | 3 | C1 | C2 | C3 | C4 | C5 |
|---|---|---|---|---|---|---|---|---|
| Type of foam | A | A | A | no | B | B | D1 | D2 |
| Foam density Kg/m³ | 25 ¹ | 25 ¹ | 25 ¹ | -- | 38 ² | 38 ² | 33 ³ | 30 ³ |
| Number of Cells / 25 mm | ⁴ <10 | ⁴ <10 | ⁴ <10 | -- | >40 | >40 | >40 | >40 |
| Average cell size | >1.5 mm | >1.5 mm | >1.5 Mm | -- | <1.5 mm | <1.5 mm | <1.5 mm | <1.5 Mm |
| Width Thickness of the Foam | 90mm | 90mm | 180mm | -- | 180mm | 180mm | 180mm | 180mm |
| | 10mm | 20mm | 20mm | | 20mm | 10mm | 10mm | 10mm |
| Second film | Si | Si | No | | | | | |

Key: A: polyethylene with closed macrocells and double perforation; B: polyurethane with open non-perforated microcells; D1: cross-linked polyolefin with closed microcells; D2: cross-linked polyethylene with closed microcells. Test density: 1(ASTM D3575-08 Suffix W), 2 (ISO 1855), 3 (ISO 845-88); Number of cells: 4 (test: BS 4443/1 Met.4), Tyre 275/45R20

### Percussion test (Hammer test)

This internal test, with substantially qualitative character, is employed for a preliminary selection of the materials based on their effectiveness in damping the cavity noise.

The tyres of the samples 1 - 3 according to the invention (with polyethylene foam A) and the comparative tyre C1 (without foam) were mounted on rim 9JX20 E.T.R.T.O. and inflated to the pressure of 2.6 bar.

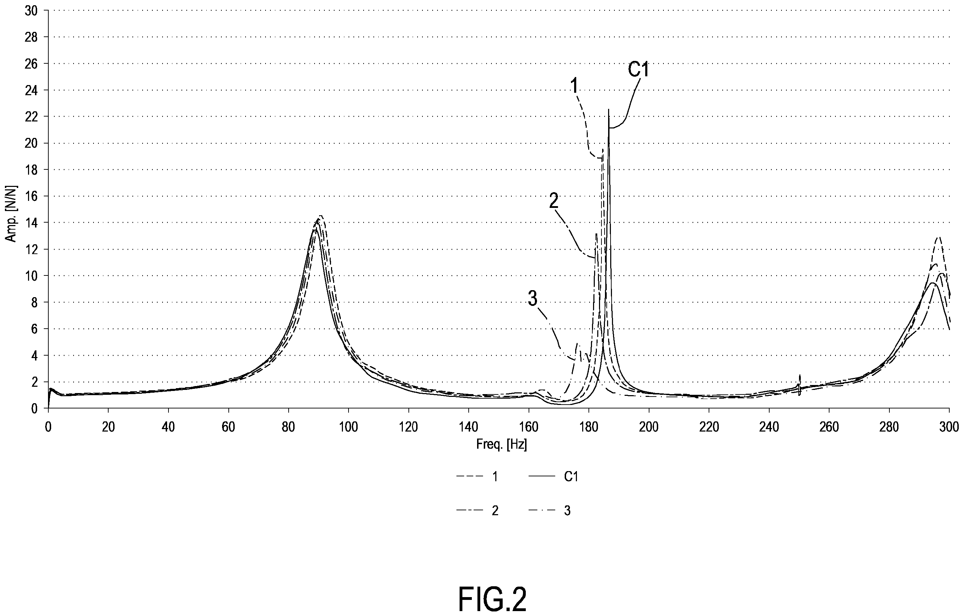

Each tyre, without load, was hit with dynamometric hammer and the amplitudes of the sounds produced at the various frequencies by the percussion were registered along the axis X and reported in the diagram of figure 2.

As can be observed from the graphs, the phenomenon of the cavity resonance is shown with a series of peaks approximately between 170 and 200 Hz.

The intensity of the resonance peak of the base tyre (C1), lacking sound absorbent foam, present at about 190 HZ, resulted damped for all the samples 1-3, proportionally to the thickness of the foam. A considerable increase of the sound absorbent activity was also observed for the sample lacking both protective films (sample 3), which at the thickness of 20 mm showed the best damping activity from among the tested samples.

### - Measurement of the noise in the driver/passenger compartment in a semi-anechoic chamber

With this test, the acoustic damping performances of tyres according to the invention (sample 3) were compared with those of comparison tyres, lacking sound absorbent foams (C1), or comprising conventional polyurethane foams (C2), in a semi-anechoic chamber.

The tyres under evaluation have been mounted on 9JX20 E.T.R.T.O. rims, inflated to the pressure of 2.6 bar and mounted on a car.

For each set of tyres, the intensity of the noise was measured inside the driver/passenger compartment with the increase of the speed, between 20 and 150 Km/h. The official tests of the automobile manufacturers evaluate the damping performances for the cavity noise of the tyres at speeds generally comprised between 40 and 80 Km/h, since at speeds lower or greater than this range there are other noise generation phenomena which render the measurements of little significance.

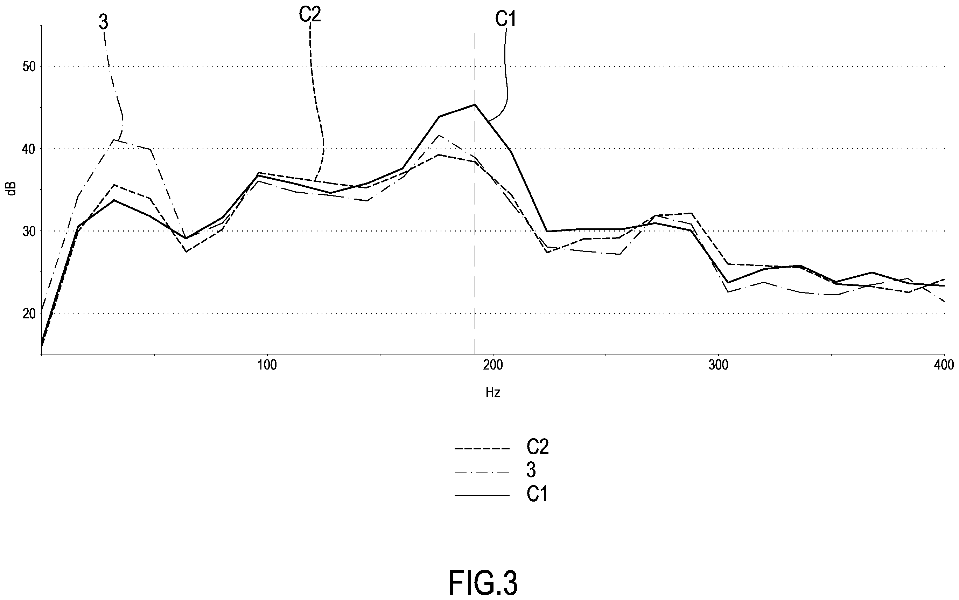

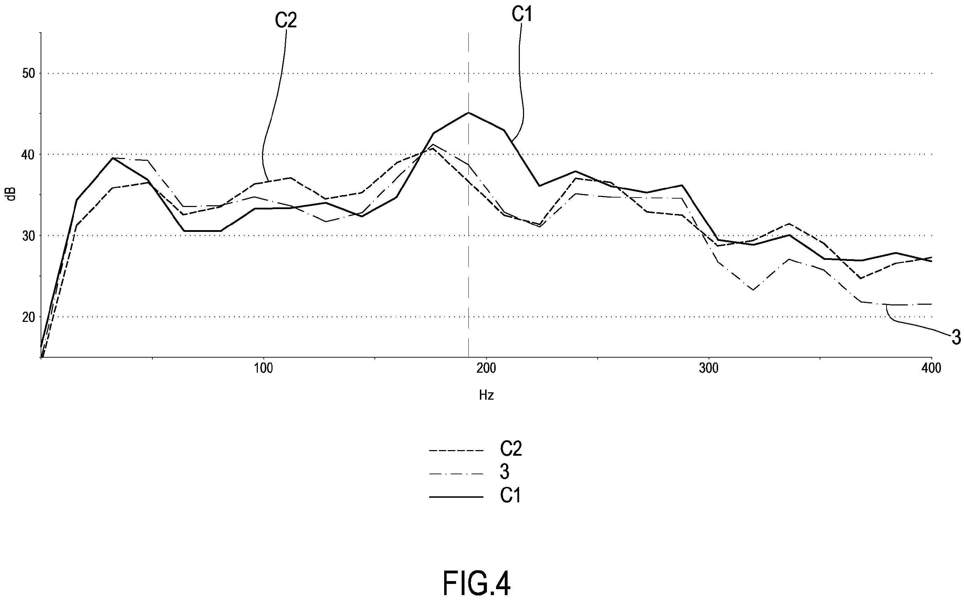

Reported in figures 3 and 4 are the intensity curves of the sound measured in the driver/passenger compartment of the vehicle for the different tyres under examination with respect to the frequencies, respectively at the speed of 65 and 80 Km/h.

As can be observed, at the frequency of the cavity resonance peak (about 190 Hz), the tyre sample 3 shows a damping effectiveness for the noise comparable to that of the tyre comprising a conventional polyurethane foam (C2). Therefore, from this test, it is inferred that the soundproof tyres of the present invention, advantageous for the hydrolytic stability and the non-hygroscopicity of the sound absorbent foams, are at least comparable in terms of acoustic performances to known soundproof tyres, comprising conventional polyurethane foams.

### - Measurement of the noise of the driver/passenger compartment on the road

With this test, the acoustic damping performances on the road of the tyre sample 3 according to the invention were compared with those of comparison tyres, lacking sound absorbent foam (C1), or comprising conventional polyurethane foams (C2, C3), or polyethylene foams with non-perforated, closed microcells (C4, C5).

The tyres under examination were mounted on 9.0Jx20 rims, inflated to the pressure of 2.3 - 2.5 bar, and mounted on a VW Tuareg 3.0 TD car.

The car was brought to the velocity of about 80 Km/h, on a rough asphalt track, at the temperature of 9-13°C, after which the motor was turned off and the noise in the driver/passenger compartment was measured and evaluated by the tester, until the vehicle stopped.

The measurement of the noise in the driver/passenger compartment was carried out by arranging the microphones at the centre of the car (right channel) and window side (left channel), at car speeds comprised between 40 and 80 Km/h and at the frequencies from 0 to 22000 Hz.

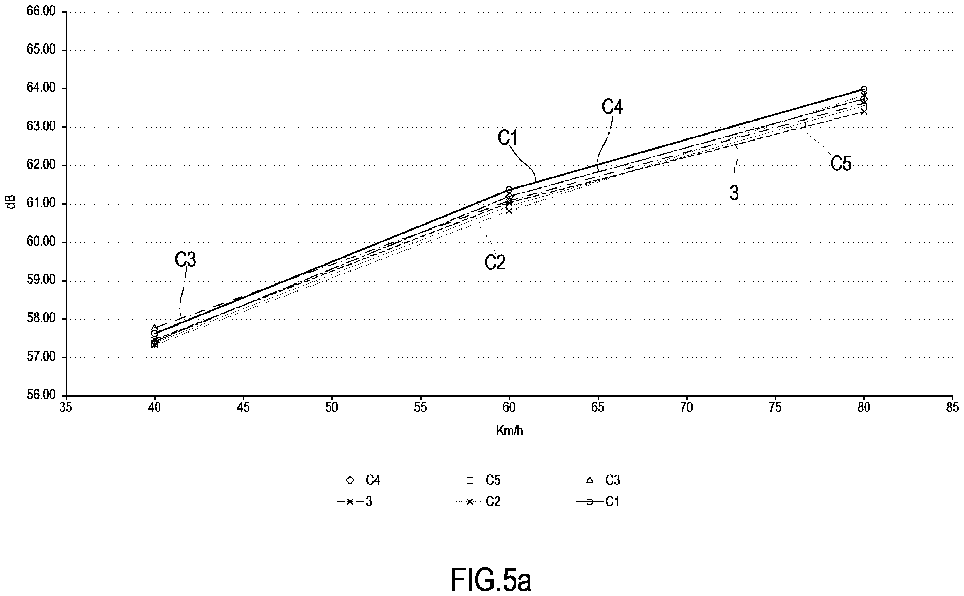

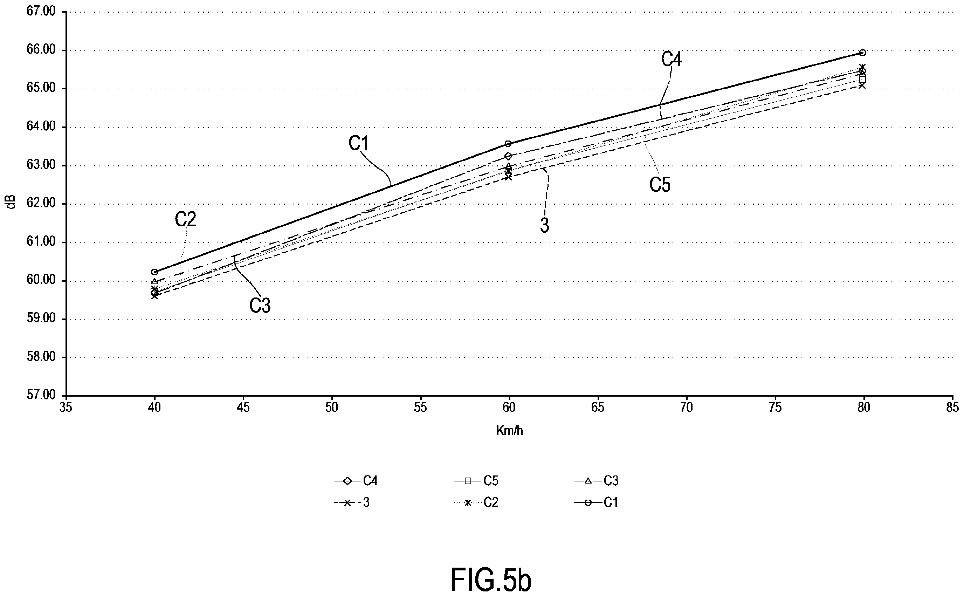

As is inferred from the Figures 5a and 5b, the noise measured in the two different positions inside the driver/passenger compartment (upper graph Fig. 5a, car centre, lower graph Fig. 5b, window side), increases with the increase of the speed.

From the graphs, it is observed that the tyre 3, according to the invention, has at least the same if not greater effectiveness in reducing the noise in the driver/passenger compartment with respect to soundproof tyres comprising polyurethane foams with conventional open microcells (C2, C3), and polyethylene foams with closed non-perforated microcells (C4, C5). Reported in the following tables 3 and 4 is the intensity of the sound measured at the peak frequency of about 190 Hz and at the speeds of 60 and 80 Km/h, respectively, in the two positions inside the driver/passenger compartment of the car for the different tyres under examination:

**Table 3**

| 60 Km/h Velocity | Car centre (dB) | Window side (dB) |
|---|---|---|
| Sample | | |
| 3 | 61.0 | 62.7 |
| C1 | 61.4 | 63.6 |
| C2 | 60.8 | 62.9 |
| C3 | 61.1 | 63.0 |
| C4 | 61.2 | 63.3 |
| C5 | 61.0 | 62.9 |

**Table 4**

| 80 Km/h Velocity | Car centre (dB) | Window side (dB) |
|---|---|---|
| Sample | | |
| 3 | 63.4 | 65.1 |
| C1 | 64.0 | 66.0 |
| C2 | 63.8 | 65.6 |
| C3 | 63.6 | 65.5 |
| C4 | 63.8 | 65.5 |
| C5 | 63.6 | 65.3 |

From the above data, it can be appreciated that the tyres according to the present invention (sample 3) generally have a damping effectiveness for the noise at least equal to if not greater than that shown by the classic polyurethane foams (C1 e C2).

More particularly, the data relative to the measurements at the speeds of 60 and 80 Km/h show that the polyethylene foams with perforated macrocells, employed in these tests, have a capacity of reducing the cavity noise that is even better than that of the classic polyurethane foams and polyethylene foams with non-perforated microcells.

### - Evaluation of the tester of the noise on the road

The car tester, in the above-described driving conditions, expressed the following opinion with regard to the noise perceived in the driver/passenger compartment:

**Table 5**

| Sample Tyre | Opinion regarding noise | Notes |
|---|---|---|
| 3 | + | Generally similar to or slightly better than C2 |
| C1 | +++ | The noise was annoying, discontinuous and penetrating |
| C2 | ++ | Passing from 80 Km/h to the lowest speeds, the cavity noise increases, still remaining acceptable |

| | | |
|---|---|---|
| Noise: +++ high; ++ average; + average-low; | | |

Also from the tester's opinion, it can be concluded that the tyre according to the invention shows sound absorption performances comparable to if not greater than those of soundproof tyres comprising conventional polyurethane foams.

### Evaluation of the duration of the sound absorbent foams

A tyre 275/45 R20 110W according to the invention (sample 3), inflated to the pressure of 3.0 bar, was subjected to a fatigue test in a closed setting which consisted of making it rotate at a constant velocity of 80 Km/h, at the temperature of 25°C, at a constant load of 1380 Kg, on a street tyre with diameter 2.0 m for 400 hours, verifying the integrity of the sound absorbent layer at intervals of 80 hours, upon stopping and dismounting of the tyre. The tyre according to the invention did not show signs of intermediate deterioration, and it exceeded the predetermined 400 hours without detachments or damage of the sound absorbent layer.

### Evaluation of the acoustic performances of the sound absorbent foams after the fatigue test

The tyre according to the invention (sample 3) was subjected, before and after the fatigue test in an above-described semi-anechoic chamber, to the measurement of the acoustic performances.

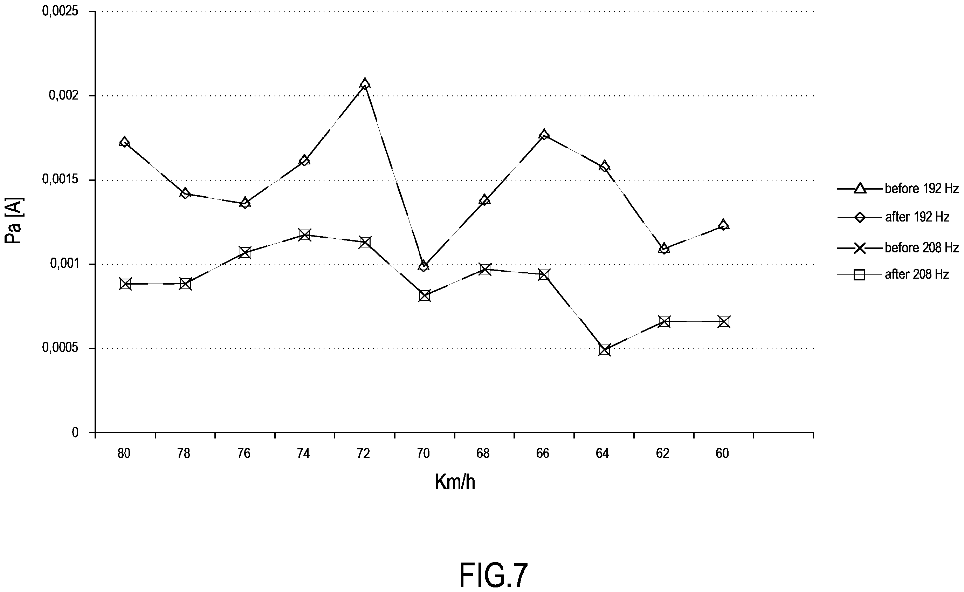

Figure 7 reports the graphs of the noise - measured in Pa according to the weighing curve "A" more similar to the human ear - produced by the tyre according to the invention at the frequencies of 192 and 208 Hz, and in the range of velocities from 80 to 60 Km/h, before and after the fatigue test. As is seen in the overlapped curves, the sound absorbent material surprisingly maintained the same sound absorption activity after 400 hours of rolling.

## Claims

1. Soundproof tyre (100) for vehicle wheels comprising at least:
- a sound absorbent material (301) applied at least on one portion of the radially inner surface (113) of the tyre, preferably of the impermeable elastomeric material layer (112), wherein said sound absorbent material comprises a foamed polyolefin material with closed macrocells **characterised by** an average size of at least 1.5 mm according to ASTM D3576.

2. The tyre (100) as claimed in claim 1 wherein said closed macrocells are **characterised by** an average size of at least 4 mm according to ASTM D3576.

3. The tyre (100) as claimed in any one of the claims 1 and 2 wherein said foamed polyolefin material with closed macrocells comprises at least one perforation per 10 cm² of at least one surface of the material itself.

4. The tyre (100) as claimed in claim 3 wherein said foamed polyolefin material with closed macrocells comprises at least 30 perforations per 10 cm² of at least one surface of the material itself

5. The tyre (100) as claimed in any one of the preceding claims wherein said foamed polyolefin material with closed cells, comprises a number of cells in 25 mm less than 30.

6. The tyre (100) as claimed in claim 5 wherein said foamed polyolefin material with closed cells comprises a number of cells in 25 mm less than 10.

7. The tyre (100) as claimed in any one of the claims 2 to 6 wherein said foamed polyolefin material with closed cells is in sheet form with two opposite main surfaces and comprises in at least one of the two surfaces at least one perforation every 4 cm².

8. The tyre (100) as claimed in claim 7 wherein said sheet form comprises in at least one of the two surfaces at least one perforation every 1 cm².

9. The tyre (100) as claimed in any one of the preceding claims, wherein said foamed polyolefin material with closed cells is obtained through expansion of a polyolefin material selected from among homo- and copolymers of ethylene, of propylene, of C₄-C₂₀ alpha-olefin or mixtures thereof.

10. The tyre (100) as claimed in claim 9 wherein said polyolefin material is a low density polyethylene (LDPE), with a density equal to or less than 0.940 g/cm³.

11. The tyre (100) as claimed in any one of the preceding claims wherein the foamed polyolefin material has a density not greater than 40 Kg/m³.

12. The tyre (100) as claimed in claim 11 wherein the foamed polyolefin material has a density not greater than 30 Kg/m³.

13. The tyre (100) as claimed in any one of the claims 3 to 12 wherein the foamed polyolefin material comprises at least 10% of cells open by the perforation.

14. The tyre (100) as claimed in claim 13 wherein the foamed polyolefin material comprises at least 25% of cells open by the perforation.

15. The tyre (100) as claimed in any one of the claims 3 to 14 wherein the foamed polyolefin material comprises at least one through perforation and at least one partial perforation.

16. The tyre (100) as claimed in any one of the claims 3 to 15 wherein the perforations of the perforated foamed polyolefin material are uniformly distributed over the entire surface of the material.

17. The tyre (100) as claimed in any one of the preceding claims 3 to 16 wherein the perforations of the perforated foamed polyolefin material have an average width greater than 0.01 mm.

18. The tyre (100) as claimed in any one of the preceding claims wherein the thickness of the foamed polyolefin material is greater than about 5 mm.

19. The tyre (100) as claimed in any one of the preceding claims wherein said tyre is high performance (HP High Performance) or ultra high performance (UHP Ultra High Performance).

20. Process for producing a soundproof tyre (100) for vehicle wheels which comprises:
i) providing a vulcanised and moulded tyre;
ii) optionally, cleaning at least one portion of the radially inner surface (113) of the tyre, and
iii) applying a sound absorbent material (301) at least on the portion, optionally cleaned, of the radially inner surface of the tyre,
wherein the sound absorbent material comprises a foamed polyolefin material with closed macrocells **characterised by** an average cell size of at least 1.5 mm according to ASTM D3576.

## Patentansprüche

1. Schallschutzreifen (100) für Fahrzeugräder, umfassend zumindest:
- ein schallabsorbierendes Material (301), das zumindest an einem Abschnitt der radial inneren Oberfläche (113) des Reifens, vorzugsweise der undurchlässigen Elastomermateriallage (112), aufgebracht ist, wobei das schallabsorbierende Material ein geschäumtes Polyolefinmaterial mit geschlossenen Makrozellen umfasst, **gekennzeichnet durch** eine mittlere Größe von zumindest 1,5 mm gemäß ASTM D3576.

2. Reifen (100) nach Anspruch 1, wobei die geschlossenen Makrozellen **gekennzeichnet sind durch** eine mittlere Größe von zumindest 4 mm gemäß ASTM D3576.

3. Reifen (100) nach einem der Ansprüche 1 und 2, wobei das geschäumte Polyolefinmaterial mit geschlossenen Makrozellen zumindest eine Perforation je 10 cm² zumindest einer Oberfläche des Materials selbst umfasst.

4. Reifen (100) nach Anspruch 3, wobei das geschäumte Polyolefinmaterial mit geschlossenen Makrozellen zumindest 30 Perforationen je 10 cm² zumindest einer Oberfläche des Materials selbst umfasst.

5. Reifen (100) nach einem der vorhergehenden Ansprüche, wobei das geschäumte Polyolefinmaterial mit geschlossenen Zellen eine Anzahl von Zellen in 25 mm unter 30 umfasst.

6. Reifen (100) nach einem der vorhergehenden Ansprüche, wobei das geschäumte Polyolefinmaterial mit geschlossenen Zellen eine Anzahl von Zellen in 25 mm unter 10 umfasst.

7. Reifen (100) nach einem der Ansprüche 2 bis 6, wobei das geschäumte Polyolefinmaterial mit geschlossenen Zellen in flächiger Form mit zwei gegenüberliegenden Hauptoberflächen vorliegt und in zumindest einer der beiden Oberflächen zumindest eine Perforation je 4 cm² umfasst.

8. Reifen (100) nach Anspruch 7, wobei die flächige Form in zumindest einer der beiden Oberflächen zumindest eine Perforation je 1 cm² umfasst.

9. Reifen (100) nach einem der vorhergehenden Ansprüche, wobei das geschäumte Polyolefinmaterial mit geschlossenen Zellen durch Expandieren eines Polyolefinmaterials ausgewählt aus Homo- und Copolymeren von Ethylen, Propylen, C4-C20-alpha-Olefin oder Mischungen davon erhalten wird.

10. Reifen (100) nach Anspruch 9, wobei das Polyolefinmaterial ein Polyethylen niedriger Dichte (LDPE) ist, mit einer Dichte gleich oder kleiner als 0,940 g/cm³.

11. Reifen (100) nach einem der vorhergehenden Ansprüche, wobei das geschäumte Polyolefinmaterial eine Dichte von nicht mehr als 40 kg/m³ aufweist.

12. Reifen (100) nach einem der vorhergehenden Ansprüche, wobei das geschäumte Polyolefinmaterial eine Dichte von nicht mehr als 30 kg/m³ aufweist.

13. Reifen (100) nach einem der Ansprüche 3 bis 12, wobei das geschäumte Polyolefinmaterial zumindest 10 % durch die Perforation geöffnete Zellen umfasst.

14. Reifen (100) nach Anspruch 13, wobei das geschäumte Polyolefinmaterial zumindest 25 % durch die Perforation geöffnete Zellen umfasst.

15. Reifen (100) nach einem der Ansprüche 3 bis 14, wobei das geschäumte Polyolefinmaterial zumindest eine durchgehende Perforation und zumindest eine partielle Perforation umfasst.

16. Reifen (100) nach einem der Ansprüche 3 bis 15, wobei die Perforationen des perforierten geschäumten Polyolefinmaterials gleichmäßig über die gesamte Oberfläche des Materials verteilt sind.

17. Reifen (100) nach einem der vorhergehenden Ansprüche 3 bis 16, wobei die Perforationen des perforierten geschäumten Polyolefinmaterials eine mittlere Breite von mehr als 0,01 mm aufweisen.

18. Reifen (100) nach einem der vorhergehenden Ansprüche, wobei die Dicke des geschäumten Polyolefinmaterials mehr als etwa 5 mm beträgt.

19. Reifen (100) nach einem der vorhergehenden Ansprüche, wobei der Reifen ein Hochleistungs- oder HP- bzw. High Performance- oder ein Ultrahochleistungs- oder UHP- bzw. Ultra High Performance-Reifen ist.

20. Verfahren zur Herstellung eines Schallschutzreifens (100) für Fahrzeugräder, wobei das Verfahren umfasst:
i) Bereitstellen eines vulkanisierten und geformten Reifens;
ii) optionales Reinigen zumindest eines Abschnitts der radial inneren Oberfläche (113) des Reifens, und
iii) Aufbringen eines schallabsorbierenden Materials (301) an zumindest einem optional gereinigten Abschnitt der radial inneren Oberfläche des Reifens, wobei das schallabsorbierende Material ein geschäumtes Polyolefinmaterial mit geschlossenen Makrozellen umfasst, **gekennzeichnet durch** eine mittlere Größe von zumindest 1,5 mm gemäß ASTM D3576.

## Revendications

1. Pneu insonore (100) pour roues de véhicule comprenant au moins :
- un matériau insonorisant (301) appliqué au moins sur une partie de la surface radialement interne (113) du pneu, de préférence de la couche de matériau élastomère imperméable (112), où ledit matériau insonorisant comprend un matériau polyoléfinique expansé ayant des macrocellules fermées **caractérisées par** une taille moyenne d'au moins 1,5 mm selon la norme ASTM D3576.

2. Pneu (100) tel que revendiqué dans la revendication 1, dans lequel lesdites macrocellules fermées sont **caractérisées par** une taille moyenne d'au moins 4 mm selon la norme ASTM D3576.

3. Pneu (100) tel que revendiqué dans l'une quelconque des revendications 1 et 2, dans lequel ledit matériau polyoléfinique expansé ayant des macrocellules fermées comprend au moins une perforation par 10 cm² d'au moins une surface du matériau lui-même.

4. Pneu (100) tel que revendiqué dans la revendication 3, dans lequel ledit matériau polyoléfinique expansé ayant des macrocellules fermées comprend au moins 30 perforations par 10 cm² d'au moins une surface du matériau lui-même.

5. Pneu (100) tel que revendiqué dans l'une quelconque des revendications précédentes, dans lequel ledit matériau polyoléfinique expansé ayant des cellules fermées comprend un nombre de cellules dans 25 mm inférieur à 30.

6. Pneu (100) tel que revendiqué dans la revendication 5, dans lequel ledit matériau polyoléfinique expansé ayant des cellules fermées comprend un nombre de cellules dans 25 mm inférieur à 10.

7. Pneu (100) tel que revendiqué dans l'une quelconque des revendications 2 à 6, dans lequel ledit matériau polyoléfinique expansé ayant des cellules fermées est sous forme de feuille avec deux surfaces principales opposées et comprend dans au moins l'une des deux surfaces au moins une perforation tous les 4 cm².

8. Pneu (100) tel que revendiqué dans la revendication 7, dans lequel ladite forme de feuille comprend dans au moins l'une des deux surfaces au moins une perforation tous les 1 cm².

9. Pneu (100) tel que revendiqué dans l'une quelconque des revendications précédentes, dans lequel ledit matériau polyoléfinique expansé ayant des cellules fermées est obtenu par expansion d'un matériau polyoléfinique choisi entre des homopolymères et des copolymères d'éthylène, de propylène, d'alpha-oléfine en C₄ à C₂₀ ou de mélanges de ceux-ci.

10. Pneu (100) tel que revendiqué dans la revendication 9, dans lequel ledit matériau polyoléfinique est un polyéthylène basse densité (LDPE), ayant une densité inférieure ou égale à 0,940 g/cm³.

11. Pneu (100) tel que revendiqué dans l'une quelconque des revendications précédentes, dans lequel le matériau polyoléfinique expansé a une densité ne dépassant pas 40 kg/m³.

12. Pneu (100) tel que revendiqué dans la revendication 11, dans lequel le matériau polyoléfinique expansé a une densité ne dépassant pas 30 kg/m³.

13. Pneu (100) tel que revendiqué dans l'une quelconque des revendications 3 à 12, dans lequel le matériau polyoléfinique expansé comprend au moins 10% de cellules ouvertes par la perforation.

14. Pneu (100) tel que revendiqué dans la revendication 13, dans lequel le matériau polyoléfinique expansé comprend au moins 25% de cellules ouvertes par la perforation.

15. Pneu (100) tel que revendiqué dans l'une quelconque des revendications 3 à 14, dans lequel le matériau polyoléfinique expansé comprend au moins une perforation traversante et au moins une perforation partielle.

16. Pneu (100) tel que revendiqué dans l'une quelconque des revendications 3 à 15, dans lequel les perforations du matériau polyoléfinique expansé perforé sont uniformément réparties sur toute la surface du matériau.

17. Pneu (100) tel que revendiqué dans l'une quelconque des revendications précédentes 3 à 16, dans lequel les perforations du matériau polyoléfinique expansé perforé ont une largeur moyenne supérieure à 0,01 mm.

18. Pneu (100) tel que revendiqué dans l'une quelconque des revendications précédentes, dans lequel l'épaisseur du matériau polyoléfinique expansé est supérieure à environ 5 mm.

19. Pneu (100) tel que revendiqué dans l'une quelconque des revendications précédentes, dans lequel ledit pneu est à haute performance (Haute Performance HP) ou à très haute performance (Très Haute Performance UHP).

20. Procédé de production d'un pneu insonore (100) pour roues de véhicule qui comprend le fait :
i) de fournir un pneu vulcanisé et moulé ;
ii) de nettoyer, facultativement, au moins une partie de la surface radialement interne (113) du pneu, et
iii) d'appliquer un matériau insonorisant (301) au moins sur la partie, facultativement nettoyée, de la surface radialement interne du pneu,
dans lequel le matériau insonorisant comprend un matériau polyoléfinique expansé ayant des macrocellules fermées **caractérisées par** une taille de cellule moyenne d'au moins 1,5 mm selon la norme ASTM D3576.
